# EUROPÄISCHE PATENTSCHRIFT

(11) **EP 0 283 695 B1**
(45) Veröffentlichungstag und Bekanntmachung des Hinweises auf die Patenterteilung: **03.11.1993**
(21) Anmeldenummer: 88101901.2
(22) Anmeldetag: 10.02.1988
(51) Int. Cl.: G09B 9/08

(54) **Flugsimulatorkomponente**
Flight simulator components
Composants d'un simulateur de vol

(30) Priorität: 21.03.1987 DE 3709333
(43) Veröffentlichungstag der Anmeldung: 28.09.1988
(73) Patentinhaber: Daimler-Benz Aerospace Aktiengesellschaft, 81663 München (DE)
(72) Erfinder: Kuhrdt, Günther, Dipl.-Ing., D-7915 Elchingen 1 (DE); Reinhard, Hans-Dieter, Dr., D-7910 Neu-Ulm (DE); Richter, Siegfried, D-7900 Ulm (DE); Schürger, Günter, Dr., D-7900 Ulm-Unterweiler (DE)
(74) Vertreter: Schulze, Harald Rudolf, Dipl.-Ing.

(56) Entgegenhaltungen:
- GB-A- 1 383 325
- US-A- 4 424 038

## Beschreibung

Die Erfindung betrifft die Simulation der elektronischen Kampfführung in einem Flugsimulator nach dem Oberbegriff des Patentanspruchs 1.

Militärische Flugzeuge werden im Einsatz von gegnerischen Bedrohungssystemen bedroht, die radarähnliche Strahlungsquellen, wozu z.B. Suchradare oder Zielverfolgungslaser gehören, besitzen. Im Flugzeug wird die von den radarähnlichen Strahlungsquellen ausgehende Strahlung von einem Warnempfänger detektiert und der Flugzeugbesatzung angezeigt. Zur Abwehr der Bedrohungen können dann vom Flugzeug aus automatisch oder manuell Gegenmaßnahmen, wie z.B. Aussenden von Stör- und Täuschsignalen oder Ausstoß von Düppeln, ausgelöst werden.

Es ist offensichtlich, daß die Wirksamkeit solcher Gegenmaßnahmen stark vom Zeitpunkt der Auslösung, der Art der Bedrohung und der Art der Gegenmaßnahme abhängt.

Aus der US-A-4 424 038 ist eine Flugsimulator-Anordnung bekannt, die in einem Kampfflugzeug zu Trainingsszwecken anstelle des standardmäßigen Radarwarnempfängers eingesetzt wird. Mit dieser Anordnung werden während eines Trainingsfluges dem Piloten realistische Bedrohungen vorgegeben und dann die zugehörigen Reaktionen (Flugmanöver) des Piloten aufgezeichnet. Diese Aufzeichnungen werden nach dem Trainingsflug ausgewertet. Bei den Bedrohungen werden lediglich die geometrischen Orte und der Typ der möglichen feindlichen Radaranlagen gespeichert und nach dem Unterschreiten einer vorgebbaren Entdeckungsentfernung angezeigt.

Es ist aber notwendig, daß eine Flugzeugbesatzung im Flugsimulator nicht nur Flugmanöver, sondern auch den Umgang mit den zur elektronischen Kampfführung gehörenden Warnempfänger- und Gegenmaßnahmeeinrichtungen des Flugzeugs trainiert. Für die Simulation ist dabei wichtig, daß das Verhalten der Bedrohungssysteme und die zugehörigen Anzeigen im Cockpit möglichst wirklichkeitsgetreu sind; vor allem auch dann, wenn Gegenmaßnahmen eingeleitet wurden. Da eine vom Flugzeug ausgehende Gegenmaßnahme nur indirekt über die radarähnlichen Strahlungsquellen das Verhalten eines Bedrohungssystems beeinflußt, kommt es in der Simulation darauf an, daß die Abhängigkeit eines Bedrohungssystems von seinen radarähnlichen Strahlungsquellen richtig beschrieben wird. Insbesondere dieser letzte Punkt wurde bisher bei gebräuchlichen Anlagen nicht zufriedenstellend gelöst.

Es ist daher Aufgabe der vorliegenden Erfindung, ein Simulationsmodell für die Bedrohungssysteme anzugeben, mit welchem deren realitätsgetreue Nachbildung möglich ist.

Die besonderen Vorteile der Erfindung liegen in der einfachen Modellierung der Wechselwirkung zwischen den radarähnlichen Strahlungsquellen und dem Bedrohungssystem einerseits und den Gegenmaßnahmen andererseits.

Im einzelnen werden einem Bedrohungssystem für unterschiedliche Arbeitsweisen Systemmoden zugeordnet, die jeweils bestimmen, welche radarähnlichen Strahlungsquellen gerade aktiv sind. Das unterschiedliche Verhalten der radarähnlichen Strahlungsquellen wird durch unterschiedliche Betriebsarten dargestellt. Darüber hinaus wird für jede radarähnliche Strahlungsquelle eine Zielerfassungsgüte ermittelt.

Es werden beispielsweise drei Zielerfassungsgüten unterschieden:
1. die radarähnliche Strahlungsquelle hat das Ziel nicht aufgefaßt, beispielsweise wegen zu geringer Intensität der Zielechos;
2. die radarähnliche Strahlungsquelle befindet sich in einem Übergangszustand, in welchem die Zielechos zwar detektiert werden, aber die Entscheidung, ob ein echtes Ziel vorliegt, noch nicht eindeutig ist. Ein Übergangszustand liegt auch vor, wenn von einem aufgefaßten Ziel die Echos ausbleiben, jedoch durch interne Verarbeitung noch ein Zielort angebbar ist;
3. die radarähnliche Strahlungsquelle hat das Ziel eindeutig aufgefaßt.

Die Beschränkung der Zielerfassungsgüten auf 3 Werte ist nicht zwingend erweist sich aber als ausreichend und sinnvoll.

Die Zielerfassungsgüten aller an einem Systemmode beteiligten radarähnlichen Strahlungsquellen sind entscheidend für die Änderung des Systemmodes.

Die Systemmoden sind hierarchisch geordnet, so daß jeweils zwischen höheren und niedrigeren Systemoden unterschieden werden kann. Ausgehend von einem Systemmode kann, außer beim höchsten und beim niedrigsten Systemmode, in einen höheren oder einen niedrigeren Systemmode umgeschaltet werden. Für jede mögliche Umschaltung des Systemmodes ist ein Schaltkriteriensatz für die Zielerfassungsgüten der beteiligten Strahlungsquellen vorgegeben. Die Zielerfassungsgüten werden mit den Schaltkriterien verglichen und daraus die Entscheidung für das Umschalten in einen höheren oder einen niederen Systemmode oder das Verweilen im bisherigen Systemmode abgeleitet. Die Umschaltkriterien können allgemein derart vorgegeben werden, daß
a) ein höherer Systemmode SMᵢ vorgegeben wird, wenn für alle am Systemmode beteiligten Strahlungsquellen k die Zielerfassungsgüten Zₖ größer oder gleich vorgegebenen Minimalwerten MIₖ für die jeweiligen Strahlungsquellen sind, d. h. Zₖ ≧ MIₖ für alle k (Hochschaltkriterien).
b) ein niedrigerer Systemmode SMⱼ vorgegeben wird, wenn für alle am Systemmode beteiligten Strahlungsquellen k die Zielerfassungsgüten Zₖ kleiner als vorgegebene Maximalwerte MAₖ für die jeweiligen Strahlungsquellen sind, d. h. Zₖ < MAₖ für alle k (Runterschaltkriterien).

Zunächst werden die Hochschaltkriterien der Reihe nach abgeprüft, und wenn diese nicht erfüllt sind, die Runterschaltkriterien. Wenn weder ein Hoch- noch ein Runterschaltkriterium erfüllt ist, wird weiterhin der bisherige Systemmode vorbestimmt. Ein vorbestimmter Systemmode wird erst dann als aktueller Systemmode übernommen, wenn auch die entsprechenden geometrischen Grenzen erfüllt sind. Wenn die geometrischen Bedingungen die Übernahme eines durch die Schaltbedingungen vorgegebenen Systemmodes als neuen Systemmode nicht erlauben, wird ein niederer Systemmode vorgegeben. Für den niedersten Systemmode entfällt das Abprüfen der geometrischen Bedingungen, so daß auf jeden Fall dieser Systemmode angenommen werden kann.

Die geometrischen Grenzen sind durch Entfernungs- und Winkelbereiche definiert und werden aus physikalischen, taktischen oder waffentechnischen Gründen eingeführt.

Die Erfindung und Begriffe werden nachfolgend an Beispielen eingehend erläutert.

Gegeben sei ein Bedrohungssystem mit einem Rundsuchradar, einem Akquisitionsradar und einem Beleuchter für einen Flugkörper mit halbaktiver Zielsuche. Das Rundsuchradar arbeite in zwei Betriebsarten, eine für den Fern- und eine für den Nahbereich, die sich durch niedere und hohe Pulswiederholfrequenzen unterscheiden. Im ersten Systemmode sei nur das Rundsuchradar in seiner Fernbereichsbetriebsart aktiv. Im nächsten Systemmode ändere das Rundsuchradar die Betriebsart, d. h. die Fernbereichssuche gehe in die Nahbereichssuche über. In den nächsten beiden Systemmoden werden dann nacheinander das Akquisitionsradar und der Beleuchter aktiviert. Das Flugzeug nähere sich aus großer Entfernung dem Bedrohungssystem.

Zunächst befindet sich das Bedrohungssystem im niedersten Systemmode. Noch bevor das Rundsuchradar das Flugzeug auffaßt, wird der Radarwarnempfänger an Bord des Flugzeugs die Strahlung des Rundsuchradars detektieren. Erst wenn die Zielechos stark genug sind, wird das Rundsuchradar das Flugzeug auffassen. Die Zielerfassungsgüte des Rundsuchradars wird dann von 1 auf 2 wechseln, eine vorbestimmte Zeit lang unverändert bleiben und danach den Wert 3 annehmen. Obwohl damit das Schaltkriterium für den Übergang in den nächsthöheren Systemmode erfüllt ist, wird ein Systemmodewechsel erst stattfinden, wenn die geometrischen Grenzen, die in der Nahbereichsbetriebsart verknüpft sind, dies erlauben.

Da der Übergang von dem Fern- in den Nahbereich mit einer Vergrößerung der Pulswiederholfrequenz verbunden ist, wird der höhere Systemmode dann angenommen, wenn das Flugzeug in den Eindeutigkeitsbereich der höheren Pulswiederholfrequenz hineinfliegt.

In ähnlicher Weise laufen dann die weiteren Systemmodeänderungen ab. Geht das Bedrohungssystem in den nächsthöheren Systemmode, wird das Akquisitionsradar zusätzlich aktiviert. Im höchsten Systemmode beginnt noch der Beleuchter zu strahlen. Die jeweilige Systemmodeänderung bringt eine entsprechende Anzeigeänderung im Flugzeug mit sich.

Auf eine Besonderheit bei Strahlungsquellen, wie dem Beleuchter, wird hingewiesen. Der Beleuchter hat keinen Empfänger. Um trotzdem bei solchen Strahlungsquellen den beschriebenen Schaltmechanismus, d.h. Vorgabe eines neuen Systemmodes durch abprüfen der Schaltkriterien, anwenden zu können, wird der Beleuchter in dem Simulation mit einem fiktiven Empfänger versehen. Die Empfängerparameter müssen dann nur so gewählt werden, daß die zu errechnende Zielerfassungsgüte zu einem Verhalten der Strahlungsquelle führt, wie es der Wirklichkeit entspricht. Für Ausbildungssimulatoren ist eine solche Behandlung des Sonderfalls ausreichend.

Durch Flugmanöver oder Gegenmaßnahmen kann die beschriebene automatische Änderung der Systemmoden beeinflußt werden. Während sich Flugmanöver hauptsächlich bei der Prüfung der geometrischen Zusatzbedingungen auswirken, verändern Gegenmaßnahmen die Zielerfassungsgüte der einzelnen Strahlungsquellen, was bei Betrachtung der Schaltbedingungen Auswirkungen auf den aktuellen Systemmode hat.

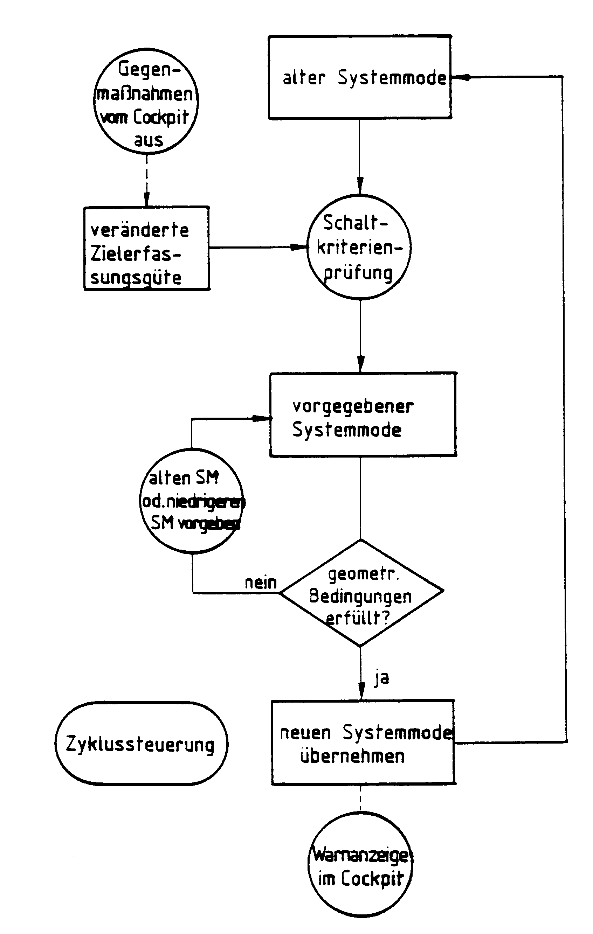

In der Abbildung ist das erfindungsgemäße System noch einmal im Prinzip skizziert. Die Basisgroßen für die Änderung eines Systemmodes bilden die Zielerfassungsgüten der einzelnen Strahlungsquellen. Diese Größen werden in aufeinanderfolgenden Rechenzyklen unter Benutzung der Radargleichung getrennt aktualisiert, was durch die Zyklussteuerung angedeutet ist. Anhand der Schaltkriterien wird in jedem Zyklus überprüft, ob aufgrund der aktualisierten Zielerfassungsgüten eine Umschaltung des Systemmodes erfolgen sollte, und ggfs. ein neuer Systemmode vorgegeben. Für den Fall, daß keiner der Schaltkriteriensätze erfüllt ist, wird der bisherige Systemmode als neuer Systemmode vorgegeben. Bevor ein vorgegebener Systemmode als neuer Stystemmode übernommen wird, wird noch geprüft, ob der vorgegebene Systemmode mit den zugehörigen geometrischen Grenzen im Einklang steht. Eventuell muß dadurch ein anderer Systemmode vorgegeben werden. Erst dann wird der vorgegebene Systemmode als neuer Systemmmode übernommen. Der neue Systemmode bestimmt die von der Warneinrichtung angezeigte Bedrohung.

Gegenmaßnahmen beeinflussen über die Schaltkriterien die Systemmodeeinstellung. Bei richtig gewählten und zum richtigen Zeitpunkt ausgelösten Gegenmaßnahmen führt das zur Umschaltung in einen niederwertigen Systemmode und damit zu einer geringeren Bedrohung, was über die Warneinrichtung wieder zur Anzeige gelangt.

## Patentansprüche

1. Flugsimulatorkomponente zur Simulation von Bedrohungssystemen mit radarähnlichen Strahlungsquellen, die die Anzeige der Bedrohungen im Cockpit in Abhängigkeit von Flugzeugbewegung und Zeit ermöglicht, wobei:
- ein Bedrohungssystem mehrere Systemmoden besitzt, wobei jeder Systemmode mit einem bestimmten Verhalten des Bedrohungssystems verknüpft ist,
- zu jedem Systemmode bestimmte aktive, radarähnliche strahlungsquellen gehören,
- eine radarähnliche Strahlungsquelle in unterschiedlichen Betriebsarten arbeitet,
- zusätzlich für jeden Systemmode geometrische Grenzen festgelegt sind und der bei Erfüllung der Schaltkriterien vorgegebene Systemmode nur dann als neuer Systemmode übernommen wird, wenn die zugehörigen geometrischen Grenzen erfüllt sind,
- in periodisch aufeinanderfolgenden Zyklen für jede radarähnliche Strahlungsquelle eine von mehreren Zielerfassungsgüten unter Benutzung der Radargleichung bestimmt wird,
dadurch gekennzeichnet,
- daß die Änderung eines Systemmodes durch Schaltkriterien ausgelöst wird, die die Zielerfassungsgüten aller an dem Systemmode beteiligten, radarähnlichen Strahlungsquellen mit vorgegebenen Werten vergleichen, wobei für jede mögliche Änderung eines Systemmodes ein eigener Schaltkriteriensatz vorgesehen ist,
- und daß eine vom Flugzeug ausgehende elektronische Gegenmaßnahme gegen eine radarähnliche Strahlungsquelle eine Änderung deren Zielerfassungsgüte und damit auch des entsprechenden Systemmodes zur Folge hat.

2. Flugsimulatorkomponente nach Anspruch 1, dadurch gekennzeichnet, daß als Zielerfassungsgüten drei Stufen (1, 2 und 3) vorgesehen sind, und daß die mittlere Zielerfassungsgüte (2) eine vorgegebene Zeit lang bestehen bleibt, wordurch beim Übergang von der niedersten Zielerfassungsgüte (1) über die mittlere Zielerfassungsgüte (2) in die höchste Zielerfassungsgüte (3) oder umgekehrt, eine Zeitabhängigkeit der Systemmodeänderung herbeigeführt wird.

## Claims

1. Flight simulator component for the simulation of threat systems with radar-like radiation sources, which enables cockpit indication of the threats in dependence on aircraft movement and time, wherein
- a threat system possesses several system modes, wherein each system mode is linked with a specific behaviour of the threat system,
- specific active radar-like radiation sources belong to each system mode,
- a radar-like radiation source functions in different operational ways,
- in addition, geometric limits are established for each system mode and the system mode predetermined on the fulfilment of the switching criteria is taken over as new system mode only then if the associated geometric limits are fulfilled,
- and one of several target acquisition classes is determined with use of the radar equalisation, in periodic successive cycles for each radar-like radiation source,
characterised thereby
- that the changing of a system mode is triggered by switching criteria which compare the target acquisition classes of all radar-like radiation sources participating in the system mode with predetermined values, wherein an own set of switching criteria is provided for every possible changing of a system mode,
- and that an electronic countermeasure deriving from the aircraft and against a radar-like radiation source has as consequence a changing of the target acquisition class thereof and therewith also the corresponding system mode.

2. Flight simulator component according to claim 1, characterised thereby that three stages (1, 2 and 3) are provided as target acquisition classes and that the middle target acquisition class (2) remains subsisting for the length of a predetermined time, whereby on the transition from the lowest target acquisition class (1) into the highest target acquisition class (3) by way of the middle target acquisition class (2) or conversely, a time dependence of the changing of the system mode is brought about.

## Revendications

1. Composant de simulateur de vol en vue de la simulation de systémes de menace avec sources de rayonnement du type radar, permettant l'affichage des menaces dans le poste de pilotage sous la dépendance du déplacement de l'avion et du temps, dans lequel :
- un système de menace possède plusieurs modes-systèmes, chaque mode-système étant associé à un comportement défini du système de menace,
- à chaque mode-système correspondent des sources actives de rayonnement de type radar,
- une source de rayonnement du type radar fonctionne en différents modes,
- des limites géométriques sont en outre définies pour chaque mode-système et le mode-système proposé lorsque les critères de commutation sont satisfaits n'est repris comme nouveau mode-système que lorsque les limites géométriques correspondantes sont satisfaites.
- un parmi plusieurs indices de qualité de détection de cibles est défini par recours à l'équation du radar dans des cycles périodiques successifs pour chaque source de rayonnement de type radar,
**caractérisé en ce que**
- la modification d'un mode-système est libérée par les critères de commutation qui comparent à des valeurs déterminées d'avance les indices de qualité de détection de cibles de toutes les sources de rayonnement de type radar communiquées au mode-système, tandis que pour chaque modification possible d'un mode-système est prévu un jeu propre de critères de commutation,
**et en ce qu**'une contre-mesure électronique émise par l'avion contre une source de rayonnement de type radar a pour conséquence une modification de son indice de qualité de détection de cibles et donc également du mode-système correspondant.

2. Composant de simulateur de vol selon la revendication 1, **caractérisé en ce que** trois étages (1, 2 et 3) sont prévus comme indices de qualité de détection de cibles, et en ce que l'indice (2) médian de qualité de détection de cibles est maintenu pendant une durée prédéterminée, grâce à quoi lors du passage de l'indice (1) le plus bas de qualité de détection de cibles à l'indice (3) le plus élevé de qualité de détection de cibles en passant par l'indice (2) médian de qualité de détection de cibles, ou inversément, est réalisée une dépendance par rapport au temps de la modification du mode-système.
